(19) **Europäisches Patentamt European Patent Office Office européen des brevets**

(11) **EP 1 604 487 B1**

(12) **FASCICULE DE BREVET EUROPEEN**

(45) Date de publication et mention
de la délivrance du brevet:
**09.05.2007 Bulletin 2007/19**

(51) Int Cl.:
***H04L 12/24*** *(2006.01)*

(21) Numéro de dépôt: **04721221.2**

(86) Numéro de dépôt international:
**PCT/FR2004/050111**

(22) Date de dépôt: **17.03.2004**

(87) Numéro de publication internationale:
**WO 2004/086678 (07.10.2004 Gazette 2004/41)**

(54) **PROCEDE D' EVALUATION DE LA BANDE PASSANTE D' UNE LIAISON NUMERIQUE**

VERFAHREN ZUR BANDBREITENABSCHÄTZUNG IN EINER DIGITALEN VERBINDUNG

METHOD FOR EVALUATING THE BANDWITH OF A DIGITAL LINK

(84) Etats contractants désignés:
**AT BE BG CH CY CZ DE DK EE ES FI FR GB GR HU IE IT LI LU MC NL PL PT RO SE SI SK TR**

(30) Priorité: **19.03.2003 FR 0350056**

(43) Date de publication de la demande:
**14.12.2005 Bulletin 2005/50**

(73) Titulaire: **Acterna IPMS
78190 Trappes (FR)**

(72) Inventeurs:
• **SCHMITT, Jean
F-28260 Rouvres (FR)**
• **LE FOLL, Dominique
Ivybridge,
Devon PL21 9XA (GB)**
• **GHITA, Bogdan
R-Bucarest (RO)**

(74) Mandataire: **Poulin, Gérard et al
BREVALEX
3, rue du Docteur Lancereaux
75008 Paris (FR)**

(56) Documents cités:
**EP-A- 0 522 211 EP-A- 1 047 223**

• **LAI K ET AL: "Measuring bandwidth" INFOCOM '99. EIGHTEENTH ANNUAL JOINT CONFERENCE OF THE IEEE COMPUTER AND COMMUNICATIONS SOCIETIES. PROCEEDINGS. IEEE NEW YORK, NY, USA 21-25 MARCH 1999, PISCATAWAY, NJ, USA,IEEE, US, 21 mars 1999 (1999-03-21), pages 235-245, XP010323735 ISBN: 0-7803-5417-6**
• **VERN PAXSON: "MEASUREMENTS AND ANALYSIS OF END-TO-END INTERNET DYNAMICS" PH.D. THESIS - UNIVERSITY OF CALIFORNIA, BERKELEY, avril 1997 (1997-04), XP002155824 Extrait de l'Internet: URL:ftp: //ftp.ee.lbl.gov/papers/vp-thesis/ dis.pdf> [extrait le 2000-12-19]**

Printed by Jouve, 75001 PARIS (FR)

**EP 1 604 487 B1**

**Description**

<u>Domaine technique</u>

L'invention se situe dans le domaine des télécommunications et concerne plus spécifiquement un procédé d'évaluation de la bande passante entre un premier et un deuxième point susceptible d'échanger des paquets de données via une liaison numérique dans un réseau de télécommunication comportant une pluralité de sous-réseaux.
L'invention concerne également un dispositif destiné à mettre en oeuvre le procédé.
L'invention trouve une application dans les réseaux de télécommunication tels que le réseau Internet.

<u>ETAT DE LA TECHNIQUE ANTERIEURE</u>

Une méthode connue pour évaluer la bande passante dans un réseau de télécommunication consiste à transmettre d'un premier point du réseau un fichier via le protocole FTP (pour File Transfer Protocol) comportant un marquage temporel et à mesurer la vitesse de réception de ce fichier par un deuxième point dudit réseau. L'émission d'un fichier de grande taille via le protocole FTP dans une liaison génère une surcharge du réseau. Par ailleurs, la charge générée par les utilisateurs du réseau au moment de la mesure étant inconnue, un transfert de fichier de petite taille via le protocole FTP ne garantit pas une utilisation optimale de la bande passante disponible. Tous ces facteurs contribuent à rendre aléatoire la mesure de la vitesse de réception des fichiers, et partant, la bande passante disponible au moment du transfert via le protocole FTP par le deuxième point du réseau.
Une autre méthode connue dans l'art antérieur consiste à mesurer le temps absolu de transmission d'un fichier de données entre les deux points du réseau dont le temps est mesuré en chaque point avec la plus grande précision possible. Cette méthode est certes plus précise mais présente un coût élevé dans la mesure où elle nécessite l'utilisation d'un système de mesure du temps de grande précision à chaque extrémité du réseau tel que délivrée par exemple par un système de transmission du type GPS (pour Global Positionning System).
Le préambule de la revendication 1 est connu du document "Measuring Bandwidth", 1999 IEEE, par k. Lai et M. Baker.
Le but de l'invention est de pallier les inconvénients de l'art antérieur décrits ci-dessus au moyen d'une méthode et d'un dispositif simple, peu coûteux et susceptibles d'être utilisés entre n'importe quels points du réseau.
Un autre but de l'invention est d'isoler et de localiser sans ambiguïté un point de congestion lorsque les données échangées entre deux points d'un réseau transitent par plusieurs sous-réseaux.

<u>EXPOSÉ DE L'INVENTION</u>

L'invention préconise un procédé d'évaluation de la bande passante entre un premier point et un deuxième point comportant des terminaux susceptibles d'échanger des paquets de données numériques dans un réseau de télécommunication comportant une pluralité de sous-réseaux.
Le procédé selon l'invention comporte les étapes suivantes :

pour chaque sens de transmission à travers l'un au moins desdits sous-réseaux,

a. associer aux paquets émis quasi-simultanément un même identifiant,
b. horodater et enregistrer les paquets reçus,
c. identifier et trier les paquets reçus avec le même identifiant,
d. sélectionner le plus grand nombre entier possible m de groupes de paquets ayant le même identifiant,
e. mesurer les intervalles de temps séparant les instants de réception par le deuxième point des paquets des groupes sélectionnés,
f. calculer la bande passante en fonction du nombre de paquets des groupes sélectionnés et de la durée totale de transmission de ces paquets.

En identifiant des paquets émis quasi-simultanément dans le flux transmis du premier vers le deuxième point de la liaison, on se place dans les conditions réelles d'utilisation des usagers du réseau dans lesquelles l'estimation de la bande passante mesurée reflète l'encombrement réel de la liaison au moment de la mesure.
Dans un mode préféré de réalisation, la bande passante est calculée par l'expression suivante :

$$\overline{BW} = \frac{1}{m}\sum_{j=1}^{m}\left[\frac{1}{n_m}\sum_{i=1}^{n_m-1}\frac{l_{i,m}}{t_{(i+1)m}-t_{i,m}}\right]$$

où

- $l_{i,m}$ représente la longueur du paquet de rang i du m$^{ième}$ groupe de paquets,
- $t_i$ représente le marquage temporel du paquet de rang i du m$^{ième}$ groupe de paquets,
- $t_{i+1}$ représente le marquage temporel du paquet de rang i+1 du m$^{ième}$ groupe de paquets,
- $n_m$ représente le nombre de paquets du m$^{ième}$ groupe de paquets.

Pour améliorer la précision de l'évaluation, le procédé est appliqué sur un nombre de groupes de paquets supérieur à 1

Dans une première variante de réalisation de l'invention, l'évaluation de la bande passante est réalisée en temps réel.

Dans une deuxième variante de réalisation, l'évaluation de la bande passante est réalisée en en temps différé.

Dans une application particulière du procédé de l'invention, le réseau de télécommunication est du type IP.

L'invention concerne également un dispositif d'évaluation de la bande passante entre un premier point et un deuxième point susceptible d'échanger des paquets de données numériques dans un réseau de télécommunication comportant une pluralité de sous-réseaux.

Ce dispositif comporte :

- des moyens de marquage des paquets émis,
- des moyens d'horodatage des paquets reçus,
- des moyens de tri des paquets reçus,
- des moyens pour mesurer les intervalles de temps séparant les instants de réception par le deuxième point des paquets émis,
- des moyens pour calculer la bande passante.

## BRÈVE DESCRIPTION DES DESSINS

D'autres caractéristiques et avantages de l'invention ressortiront de la description qui va suivre, prise à titre d'exemple non limitatif en référence aux figures annexées dans lesquelles :

- la figure 1 illustre schématiquement une liaison numérique dans un réseau de télécommunication dans lequel est mis en oeuvre le procédé selon l'invention,
- la figure 2 est un schéma bloc d'un module d'analyse de paquets selon l'invention.

## EXPOSÉ DÉTAILLÉ DE MODES DE RÉALISATION PARTICULIERS

L'invention va maintenant être décrite dans une mise en oeuvre dans le réseau Internet.

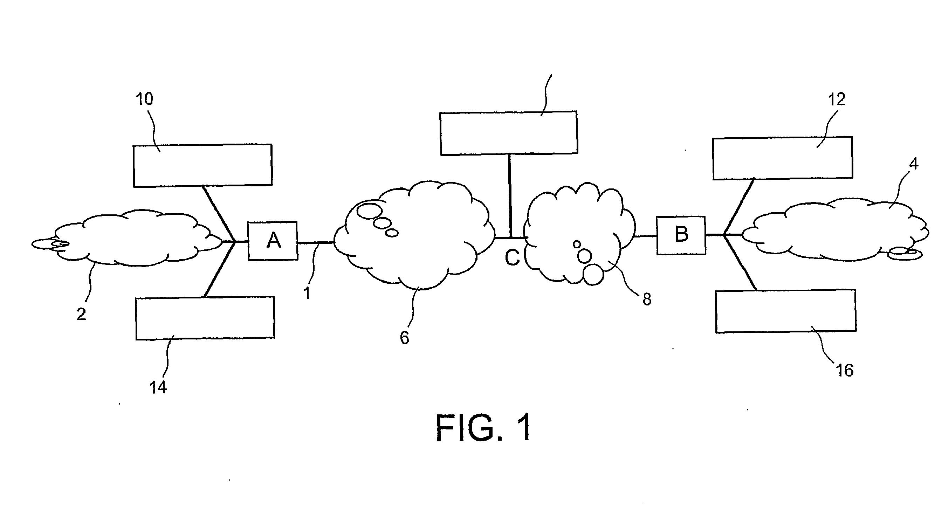

La figure 1 illustre schématiquement une liaison numérique bidirectionnelle 1 entre un premier terminal A et un deuxième terminal B connectés respectivement à un premier réseau local 4 et à deuxième réseau local 6 et échangeant des données numériques à travers un premier sous-réseau 6 et un deuxième sous-réseau 8 selon le mode TCP (pour Transmission control Protocol) ou selon le mode UDP (User Datagram Protocol). A chaque extrémité de la liaison numérique 1 entre les terminaux A et B sont agencés respectivement un premier et un deuxième modules (10, 12) de marquage des paquets de données émis par le terminal A (respectivement B) et un module d'analyse (14, 16) des paquets de données reçus par le terminal A (respectivement B).

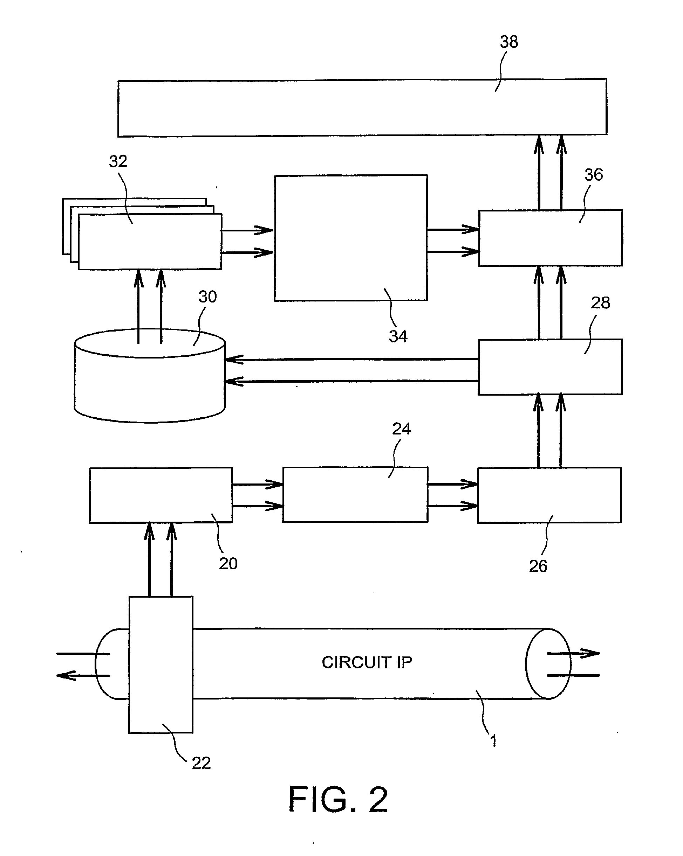

La figure 2 illustre un schéma bloc d'un module d'analyse selon un mode préféré de réalisation comportant une interface d'adaptation 20 reliée à la liaison IP 1 via un coupleur 22, un module 24 d'extraction de paquets de données de la liaison 1, un module 26 d'acquisition desdits paquets, un module 28 d'horodatage des paquets extraits destiné à associer à un groupe de paquets émis quasi-simultanément un même identifiant temporel, une mémoire 30 destinée à stocker les paquets horodatés, un module 32 de tri des paquets ayant le même identifiant temporel, un module 34 de sélection destiné à isoler les groupes de paquets ayant le même identifiant temporel et le plus grand nombre de paquets reçus, un module 36 de mesure du temps de transfert inter paquet et un module 38 de calcul de la bande passante.

En fonctionnement, chacun des terminaux A ou B peut être simultanément émetteur et récepteur. Les données échangées transitent par les réseaux 6 et 8 dont les encombrements respectifs à un instant donné dépendent du nombre d'utilisateurs connectés. Le marquage des paquets est obtenu suite à une requête envoyée par le terminal récepteur au terminal émetteur. Il peut être réalisé, par exemple, par l'activation de l'option d'horodatage décrite dans la norme RFC 1323.

Pour évaluer la bande passante disponible de bout en bout, le module 24 d'extraction isole les paquets de données transmis pendant un laps de temps très court du terminal émetteur vers le terminal récepteur et transmet ces paquets au module d'horodatage 28 qui associe à chaque paquet une date d'émission. Les paquets sont ensuite stockés dans la mémoire 30. Le module 32 trie les paquets portant la même date d'envoi et les transmet au module 34. Ce dernier sélectionne un nombre entier de groupes parmi les groupes triés comportant le plus grand nombre de paquets et transmet ces groupes au module de mesure 36 qui mesure les intervalles de temps séparant la réception des différents paquets successifs. Les intervalles mesurés sont ensuite transmis au module 38 de calcul de la bande passante qui calcule en temps réel la bande passante de la liaison en fonction de la longueur totale des paquets analysés et de la durée de transmission de ces paquets.

Pour évaluer la bande passante disponible dans chaque sous-réseau, l'analyse des paquets reçus est effectuée par le troisième module 18 agencé entre les sous-réseaux 6 et 8.

## Revendications

1. Procédé d'évaluation de la bande passante entre un premier point et un deuxième point susceptible d'échanger des paquets de données numériques dans un réseau de télécommunication comportant une pluralité de sous-réseaux, procédé **caractérisé en ce qu'**il comporte les étapes suivantes:

   pour chaque sens de transmission à travers l'un au moins desdits sous-réseaux,

   a. associer aux paquets émis quasi-simultanément un même identifiant,
   b. horodater et enregistrer les paquets reçus,
   c. identifier et trier les paquets reçus avec le même identifiant,
   d. sélectionner le plus grand nombre entier possible m de groupes de paquets ayant le même identifiant,
   e. mesurer les intervalles de temps séparant les instants de réception par le deuxième point des paquets des groupes sélectionnés,
   f. calculer la bande passante en fonction du nombre de paquets des groupes sélectionnés et de la durée totale de transmission de ces paquets.

2. Procédé selon la revendication 1, **caractérisé en ce que** la bande passante est calculée par l'expression suivante :

$$\overline{BW} = \frac{1}{m} \sum_{j=1}^{m} \left[ \frac{1}{n_m} \sum_{i=1}^{n_m-1} \frac{l_{i,m}}{t_{(i+1)m} - t_{i,m}} \right]$$

   où :

   • $l_{i,m}$ représente la longueur du paquet de rang i du m$^{\text{ième}}$ groupe de paquets,
   • $t_i$ représente le marquage temporel du paquet de rang i du m$^{\text{ième}}$ groupe de
   • paquets,
   • $t_{i+1}$ représente le marquage temporel du paquet de rang i+1 du m$^{\text{ième}}$ groupe
   • de paquets,
   • $n_m$ représente le nombre de paquets du m$^{\text{ième}}$ groupe de paquets.

3. Procédé selon la revendication 2, **caractérisé en ce que** le nombre m est supérieur ou égal à 1.

4. Procédé selon l'une des revendications 1 à 3, **caractérisé en ce que** le marquage des paquets de données est réalisé au point d'émission sur requête du point de réception.

5. Procédé selon l'une des revendications 1 à 4, **caractérisé en ce que** l'évaluation de la bande passante est réalisée en temps réel.

6. Procédé selon l'une des revendications 1 à 4, **caractérisé en ce que** l'évaluation de la bande passante est réalisée en temps différé.

7. Procédé selon l'une des revendications précédentes, **caractérisé en ce que** le réseau de télécommunication est du type IP.

8. Module d'analyse de paquets de données reçus dans un réseau de télécommunication, **caractérisé en ce qu'**il comporte :

   • des moyens pour associer aux paquets émis quasi-simultanément un même identifiant,
   • des moyens pour horodater et enregistrer des paquets reçus,
   • des moyens pour identifier et trier les paquets reçus avec le même identifiant,
   • des moyens pour sélectionner le plus grand nombre entier possible m de groupes de paquets ayant le même identifiant,
   • des moyens pour mesurer les intervalles de temps séparant les instants de réception par le deuxième point des paquets des groupes sélectionnés,
   • des moyens pour calculer la bande passante en fonction du nombre de paquets des groupes sélectionnés et de la durée totale de transmission de ces paquets.

9. Dispositif d'évaluation de la bande passante entre un premier point et un deuxième point échangeant des paquets de données dans un réseau de télécommunication comportant un module de marquage des paquets émis et un module d'analyse des paquets reçus, selon la revendication 8.

## Claims

1. A method for evaluating the bandwidth between a first point and a second point liable to exchange digital data packets in a telecommunications network including a plurality of sub-networks, **characterized in that** it includes the following steps:

   for each transmission direction through at least one of said sub-networks,

   **a.** associating a same identifier with the quasi-simultaneously transmitted packets,
   **b.** time-stamping and recording the received packets,
   **c.** identifying and sorting the packets received with the same identifier,
   **d.** selecting the largest possible integral number m of groups of packets with the same identifier,
   **e.** measuring the time intervals separating the instants when the packets of the selected groups are received by the second point,
   **f.** calculating the bandwidth according to the number of packets of the selected groups and to the total transmission time of these packets.

2. The method according to claim 1, **characterized in that** the bandwidth is calculated with the following expression:

$$\overline{BW} = \frac{1}{m}\sum_{j=1}^{m}\left[\frac{1}{n_m}\sum_{i=1}^{n_m-1}\frac{l_{i,m}}{t_{(i+1)m}-t_{i,m}}\right]$$

wherein:

   • $l_{i,m}$ represents the length of the packet of rank i of the $m^{th}$ group of packets,
   • $t_i$ represents the time mark of the packet of rank i of the $m^{th}$ group of packets,
   • $t_{i+1}$ represents the time mark of the packet of rank i+1 of $m^{th}$ group of packets,
   • $n_m$ represents the number of packets of the $m^{th}$ group of packets.

3. The method according to claim 2, **characterized in that** the number m is largest than or equal to 1.

4. The method according to any of claims 1 to 3, **characterized in that** marking of the data packets is achieved at the transmitting point upon a request from the receiving point.

5. The method according to any of claims 1 to 4, **characterized in that** the evaluation of the bandwidth is achieved on-line.

6. The method according to any of claims 1 to 4, **characterized in that** the evaluation of the bandwidth is achieved off-line.

7. The method according to any of the preceding claims, **characterized in that** the telecommunications network is of the IP type.

8. A module for analyzing data packets received in a telecommunications network, **characterized in that** it includes:

   • means for associating the same identifier with packets transmitted quasi-simultaneously,
   • means for time-stamping and recording the packets received,
   • means for identifying and sorting the packets received with the same identifier,
   • means for selecting the maximum integral number m of groups of packets having the same identifier,
   • means for measuring the time intervals separating the reception instants by the second point of the packets of selected groups,
   • means for calculating the bandwidth as a function of the number of packets of the selected groups and the total transmission time of said packets.

9. Device for evaluating the bandwidth between a first point and a second point exchanging data packets in a telecommunications network comprising a module for marking transmitted packets and a module analyzing packets received in accordance with claim 8.

**Patentansprüche**

1. Verfahren zur Abschätzung des Passbandes zwischen einem ersten Punkt und einem zweiten Punkt, zwischen denen digitale Datenpakete in einem Telekommunikationsnetz mit mehreren Nebennetzen ausgetauscht werden können, wobei das Verfahren **dadurch gekennzeichnet ist, dass** es die folgenden Schritte umfasst:

   für jede Übertragungsrichtung über mindestens eines der genannten Nebennetze,

   a. annähernd gleichzeitiges Zuordnen eines gleichen Identifizierers zu den emittierten Paketen,
   b. zeitliches Erfassen und Aufzeichnen der empfangenen Pakete,
   c. Identifizieren und Sortieren der empfangenen Pakete mit gleichem Identifizierer,
   d. Auswählen der größtmöglichen ganzen Zahl m aus Paketgruppen mit dem gleichen Identifizierer,
   e. Messen der Zeitintervalle, welche die Empfangsmomente voneinander trennen, durch den zweiten Paketpunkt der ausgewählten Gruppen,
   f. Berechnen des Passbandes in Abhängigkeit von der Anzahl von Paketen der ausgewählten Gruppen und von der Gesamtdauer der Übertragung dieser Pakete.

2. Verfahren nach Anspruch 1, **dadurch gekennzeichnet, dass** das Passband durch den folgenden Ausdruck berechnet wird:

$$\overline{BW} = \frac{1}{m} \sum_{j=1}^{m} \left[ \frac{1}{n_m} \sum_{i=1}^{n_m-1} \frac{l_{i,m}}{t_{(i+1)m} - t_{i,m}} \right]$$

wobei:

- $l_{i,m}$ die Länge des Pakets vom Rang i der $m^{ten}$ Paketgruppe darstellt,
- $T_i$ die Zeitmarkierung des Pakets vom Rang i der $m^{ten}$ Paketgruppe darstellt,
- $T_i + 1$ die Zeitmarkierung des Pakets vom Rang i+1 der $m^{ten}$ Paketgruppe darstellt,
- $n_m$ die Anzahl von Paketen der $m^{ten}$ Paketgruppe darstellt.

3. Verfahren nach Anspruch 2, **dadurch gekennzeichnet, dass** die Anzahl m größer oder gleich 1 ist.

4. Verfahren nach einem der Ansprüche 1 bis 3, **dadurch gekennzeichnet, dass** die Markierung der Datenpakete am Emissionspunkt auf Anforderung vom Empfangspunkt erfolgt.

5. Verfahren nach einem der Ansprüche 1 bis 4, **dadurch gekennzeichnet, dass** die Auswertung des Passbandes in Echtzeit erfolgt.

6. Verfahren nach einem der Ansprüche 1 bis 4, **dadurch gekennzeichnet, dass** die Auswertung des Passbandes zeitversetzt erfolgt.

7. Verfahren nach einem der vorangehenden Ansprüche, **dadurch gekennzeichnet, dass** das Telekommunikationsnetz vom IP-Typ ist.

8. Analysemodul von Datenpaketen, die in einem Telekommunikationsnetz empfangen werden, **dadurch gekennzeichnet, dass** es umfasst:

- Mittel zum Assoziieren eines gleichen Identifizierers zu den annähernd gleichzeitig emittierten Paketen,
- Mittel zum zeitlichen Erfassen und Aufzeichnen der empfangenen Pakete,
- Mittel zum Identifizieren und Sortieren der mit dem gleichen Identifizierer empfangenen Pakete,
- Mittel zum Auswählen der größtmöglichen ganzen Zahl m von Paketgruppen mit dem gleichen Identifizierer,
- Mittel zum Messen der Zeitintervalle, welche die Empfangsmomente voneinander trennen, durch den zweiten Punkt der Pakete der ausgewählten Gruppen,
- Mittel zum Berechnen des Passbandes in Abhängigkeit von der Anzahl der Pakete der ausgewählten Gruppen und von der Gesamtdauer der Übertragung dieser Pakete.

9. Vorrichtung zum Abschätzen des Passbandes zwischen einem ersten Punkt und einem zweiten Punkt, welche Datenpakete in einem Telekommunikationsnetz austauschen, mit einem Modul zur Markierung der gesendeten Pakete und einem Modul zur Analyse der empfangenen Pakete gemäß Anspruch 8.

FIG. 1

FIG. 2